# EUROPEAN PATENT SPECIFICATION

(11) **EP 3 023 781 B1**
(45) Date of publication and mention of the grant of the patent: **12.07.2017**
(21) Application number: 15193753.9
(22) Date of filing: 09.11.2015
(51) Int. Cl.: G01N 30/00, B29C 65/48, B29C 65/00

(54) **DISPOSABLE CARTRIDGE AND ASSEMBLY METHOD FOR ASYMMETRICAL FLOW FIELD-FLOW FRACTIONATION**
EINWEGKARTUSCHE UND ANORDNUNGSVERFAHREN ZUR ASYMMETRISCHEN FLUSSFELDFLUSSFRAKTIONIERUNG
CARTOUCHE JETABLE ET PROCÉDÉ D'ASSEMBLAGE DE FRACTIONNEMENT EN CONTINU DE FLUX ASYMÉTRIQUE

(30) Priority: 19.11.2014 EP 14020089
(43) Date of publication of application: 25.05.2016
(73) Proprietor: CSEM Centre Suisse d'Electronique et de Microtechnique SA - Recherche et Développement, 2002 Neuchâtel (CH)
(72) Inventor: Mueller, David, 6048 Horw (CH)
(74) Representative: P&TS SA (AG, Ltd.)

(56) References cited:
- EP-A1- 2 716 441
- WO-A1-2014/148963
- WO-A2-2006/017274
- US-A- 3 821 052
- US-A1- 2009 301 942
- US-A1- 2012 234 731
- CHIA-WEN TSAO ET AL: "Bonding of thermoplastic polymer microfluidics", MICROFLUIDICS AND NANOFLUIDICS, SPRINGER, BERLIN, DE, vol. 6, no. 1, 13 November 2008 (2008-11-13), pages 1-16, XP019667827, ISSN: 1613-4990

## Description

The work leading to this invention has received funding from the European Union Seventh Framework Programme (FP7-NMP-2011-SME-5) under grant agreement n° 280779.

### Field of the invention

The present invention concerns a disposable cartridge for Asymmetrical Flow Field-Flow Fractionation, and a method for assembling such disposable cartridge.

### Description of related art

Asymmetrical Flow Field-Flow Fractionation (AF4) is a separation technique based on the theory of field flow fractionation (FFF) and applicable to particles over a wide size range, for example between 1 nm and 10 µm. It can be used for example for characterizing nanoparticles, polymers, proteins, etc. e.g. for determining their shape, size and/or chemistry.

This technique is performed by using a separation cartridge, which is connected to the rest of the classical AF4 setup, i.e. pumps, detector, collector, etc., as known in the field.

We remember briefly here that in the classical Symmetrical Flow Field Flow Fractionation (F4), a cross flow penetrating both upper and lower channel walls is applied perpendicularly to the general direction of flow. The Asymmetrical Flow Field Flow Fractionation (AF4) is different from the F4 in that there is a solid top layer comprising fluid connectors and enclosing the channel. Moreover a semi-permeable membrane is placed above a frit and carried by a bottom plate.

The AF4 technology is simpler than the F4 technology, as it eliminates difficulties associated with heterogeneity and variable permeability of the upper frit of the F4 approach, whilst still providing the particle separation with flow gradients.

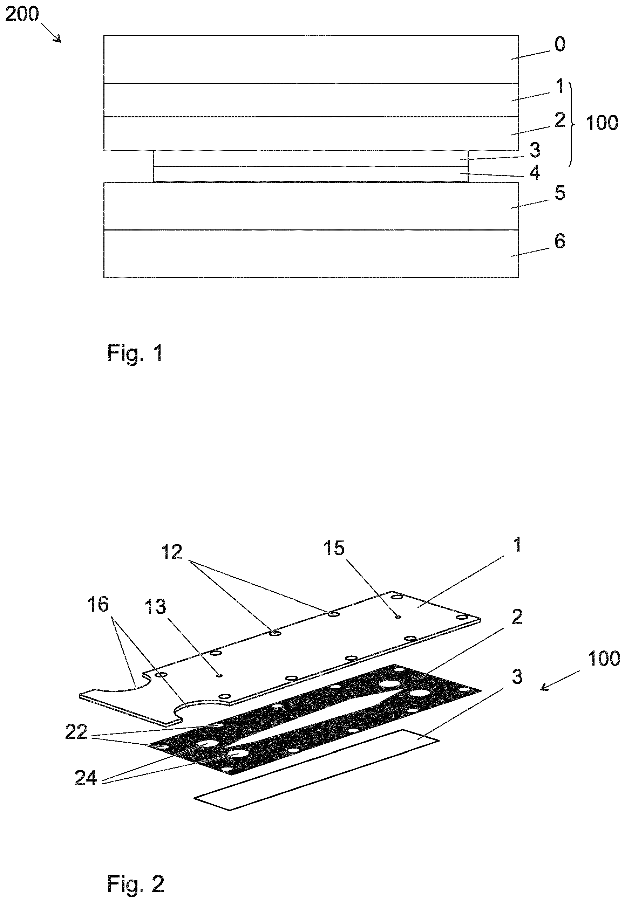

An example of a separation cartridge for AF4 is illustrated in Fig. 1. It must be noted that the proportions and/or the dimensions of the illustrated components of the cartridge are just indicative and that they do not correspond necessarily to the real proportions and/or the dimensions of the components. The illustrated cartridge comprises seven different components which are put on top of each other. They are then compressed by connecting the cover and ground plates 0 respectively 6 by connecting means, e.g. by screwing. In this context the verb "connect" does not indicate a direct contact between the cover plate 0 and the ground plate 6, but the fact that they are brought or pushed towards each other.

In particular, the separation cartridge 200 for AF4 comprises a cover plate 0, a top layer 1, a spacer 2, a semipermeable membrane 3, a frit 4 carrying the membrane, a channel bottom 5 and a ground plate 6.

The cover plate 0 and the ground plate 6 are solid and made in general of steel. They are used for compressing the cartridge 200 and to give it some structural stability. In fact the pressure in the cartridge can be high, e.g. it can reach up to 20 bar. Therefore, the plates 0, 6 also function as a security measure, so the cartridge does not break apart.

The top layer 1 and the channel bottom 5 are in general made by Poly(methyl methacrylate) (PMMA) or Polyether ether ketone (PEEK). The top layer 1 serves as upper channel wall and comprises fluidic connections for liquid flow inlet and outlet. The channel bottom 5 comprises in general a cavity wherein the frit 4 is placed and one or more channels to remove the eluent that passed through the membrane 3 and the frit 4 (i.e. the crossflow). It also contains a fluidic connection for the crossflow outlet.

The spacer 2 defines the channel geometry. It is in general made of polyethylene terephthalate (PET, also known as Mylar).

The frit 4 supports the membrane 3, by providing sufficient mechanical stability and avoiding the cracking of the membrane 3 under pressure. It relays the fluid pushed through the membrane 3 toward the outlet crossflow. The frit 4 usually has pores to avoid any backpressure and to let the solvent pass without additional resistance. It is in general made of stainless steel, ceramic or titanium. As discussed, in general the frit 4 is placed in a cavity of the channel bottom 5.

The membrane 3 serves as lower channel wall and accumulation wall for particles. It is semi-permeable and has a pore size in the range of ca. 5 kDa to 30 kDa, depending on the targeted application. It is made in general by cellulose, e.g. regenerated cellulose.

The above mentioned materials for each parts of the cartridge 200 are just an example and each of the parts of the standard cartridge 200 can be made of other material known in the field. For example, the membrane 3 can be made of ceramic.

The spacer 2 is cut-out and defines the shape of the separation channel. When all parts 0 to 6 are connected together, e.g. by screwing, the pressure exerted on the edges of the spacer 2 against the membrane 3 seals the channel. A suspension of particles is pumped in this channel, wherein a parabolic flow profile is created. As known, particles size will be separated according to their size as they move through the channel.

The three main parts responsible for the formation of the separation channel, which only takes place during the final compression between the cover and ground plates 0 and 6, are the top layer 1, the spacer 2 and the membrane 3. They are also the ones most prone to contamination.

In particular, the membrane 3 is the key part of every AF4 cartridge 200. As discussed, it serves as lower channel boundary and as semipermeable accumulation wall for the particles. It is therefore exposed to various particles and eluents, quickly alternating flow speed and fluctuating pressures. Therefore, the membrane 3 needs to be exchanged frequently: in fact, those influences can damage the membrane surface and lead to particle aggregation and contamination.

This routine exchange procedure is long in the state of the art and can take up to several hours. It includes the complete disassembly of the cartridge, the removing of the used membrane 3 and the cleaning of all relevant parts. Afterwards, a new membrane 3 is cleaned, e.g. with deionized water, and the cartridge is re-assembled. Moreover exchanging the membrane needs some know-how to minimize errors and maximize reproducibility.

US 2009301942 A1 by Wyatt et al. discloses a cartridge for AF4 comprising a top layer, a membrane, and a spacer between the top layer and the membrane, wherein the spacer comprises bonding holes.

EP1879025 describes a cartridge comprising a regenerable membrane, i.e. a membrane that can be cleaned after its performance has dropped to unacceptable levels, and can then be used again with essentially the same performance as the original membrane. The membrane can be glued on the frit. This solution allows to improve the reproducibility of the measurement results, but does not solve the above-mentioned problems as the membrane needs to be cleaned in-between the measurements.

WO9944726 describes a field flow fractionation channel device comprising a channel module and a holding module. The channel module comprises a top part, a spacer, a membrane and a lower part. The upper part and the lower part are detachably connected to one another. The channel module can be detached from the holding module and reinserted. The channel module, once detached, is completely disassembled so as to change the separation membrane. This solution is complex and requires a disassembling step of the channel module for changing the membrane.

Disposable cartridge are known for Hollow Fiber Flow Field-Flow Fractionation (HF5). However this techniques uses circular separation tubes and is inherently different from the AF4.

It is an aim of the present invention to propose a solution for improving the membrane exchange procedure.

It is an aim of the present invention to propose a solution for accelerating the membrane exchange procedure.

### Brief summary of the invention

The applicant found that those aims can be reached by replacing the three core parts of a conventional cartridge 200 by a single disposable cartridge 100 that can be handled as a mono-bloc entity.

The disposable cartridge 100 for Asymmetrical Flow Field-Flow Fractionation according to the invention in fact comprises:
- a top layer,
- a membrane,
- a spacer between the top layer and the membrane.

The top layer, the membrane and the spacer, which are the components responsible for the formation of the separation channel and also the ones most prone to contamination, form therefore a single unit.

In order to form a single unit, the top layer, the membrane and the spacer are bonded with each other.

The use of the disposable cartridge according to the invention has considerable advantages in terms of ease of use, avoiding cross-contamination and ensuring a consistent performance. It is not disassembled after its use for extracting the used membrane, but it is replaced by a new disposable cartridge, comprising a new membrane.

In order to bond the top layer, the membrane and the spacer together, the spacer according to the invention comprises bonding holes arranged to receive some glue. In other words, some glue is deposited in the bonding holes so as to directly bonding the membrane (placed under the spacer) with the top layer (placed on the spacer) thereby fixing the spacer in between. In the context of the present invention, the verb "fixing" indicates that the spacer is hold by the membrane and the top layer. The verb "fixing" does not necessarily mean that the spacer cannot move. In fact, in one preferred embodiment, it can move slightly between the membrane and the top layer. The bonding holes in the spacer are through holes. They are not blind holes.

According to the invention, the glue is positioned in the bonding holes of the spacer and not on the spacer surface itself. In fact, the spacer has in general a very smooth surface so that the direct adhesion of a glue on the spacer can be difficult for many kids of glue. In addition, if the glue was positioned directly on the spacer surface, it could obstruct the compression of different parts while they are being pressed together. This will affect the channel formation and thereby influence the separation efficiency.

The glue is necessary to keep the top layer, the membrane and the spacer together but does not have any influence on the channel formation itself.

In one embodiment, the bonding holes are sufficiently large such that the glue can expand into the bonding holes while being compressed, without interfering with the spacer, i.e. without touching the spacer.

In another embodiment, the glue has a suitable viscosity allowing the glue to expand into the bonding holes while being compressed, without touching the spacer.

In fact, if the glue viscosity is too low it will spread out immediately upon contact with a surface. Thereby, it will cover a large area and get into contact with the spacer.

On the other hand, if the glue is too viscous, it cannot be deposited in a highly controlled manner.

In one embodiment, the glue has a viscosity at room temperature belonging to the range 5 Pa·s (Pascal-seconds) to 150 Pa·s, in particular 20 Pa·s to 80 Pa·s, for example 40 Pa·s.

In one embodiment, an adhesion parameter of the glue allows to prevent the detaching of the membrane from the top layer over time or during the transport. In fact, if the glue does not adhere strongly enough to the different parts, those parts can easily detach from each other. In one embodiment, the glue has a shear strength superior than 8 MPa, e.g. superior than 10 MPa.

In one embodiment, the glue is the glue commercialised under the name 3M Scotch-Weld™ epoxy 2216.

The bonding holes can have any shape, including but not limited to a circular, oval, squared, rectangular, circular or polygonal shape.

In one preferred embodiment, they have a circular shape, and a diameter larger than 5 mm, e.g. larger than 8 mm, e.g. 10 mm for a cartridge of length of 10 cm.

The minimum number of bonding holes for obtaining an efficient bonding of the three parts of the disposable cartridge according to the invention is two. The spacer has in general a rectangular shape and therefore two main axes of symmetry. In one preferred embodiment, the position of the bonding holes is symmetrical with regard to at least one axis of symmetry of the spacer.

In one preferred embodiment the number of bonding holes is even. However, an odd number of bonding holes is also possible.

The spacer has in general four corners. In one preferred embodiment, the bonding holes are four and they are placed at or near the four corners of the spacer.

In one preferred embodiment, the distance between each bonding hole and the channel is more than 3.5 mm, e.g. more than 4.5 mm, e.g. 5.5 mm for a cartridge having a length of about 10 cm. In the context of the present invention, the expression "distance between each bonding hole and the channel" indicates the length of the line segment which joins the center of the hole to the line defining the boundary of the channel geometry, and is perpendicular to this line.

In one embodiment, the top layer is longer and/or larger than the spacer so that, when these parts are connected together, at least a part of the top layer does not enter into contact with the spacer. In such a way, a user can use the top layer for easily handling the disposable cartridge. In one preferred embodiment, the handling area is at an end of the top layer and comprises at least one notch, e.g. a semi-circular notch, for facilitating the handling of the disposable cartridge according to the invention.

In one embodiment, the top layer comprises first assembly holes and the spacer comprises second assembly holes distinct from the bonding holes. The first assembly holes and the second assembly holes have the same shape and are arranged to be aligned when the top layer is superposed to the spacer so as to receive screws for compressing the top layer, the membrane and the spacer together. In one embodiment, they are circular and have a diameter less than 4 mm, e.g. 2 mm.

In one preferred embodiment, the bonding holes are larger than the second assembly holes on the spacer. Preferably the disposable cartridge according to the invention comprises a sealed packaging for protecting it before its use. In one aspect, the sealed packaging comprises two pieces of a foil and the cartridge according to the invention can be glued or in general fixed in between. In another embodiment, the cartridge according to the invention is hermetically sealed in a sterile environment to prevent contamination.

The present invention concerns also a device for Asymmetrical Flow Field-Flow Fractionation, comprising
- a cover plate,
- the disposable cartridge according to the invention, the disposable cartridge being arranged to be placed under the cover plate and over a frit,
- the frit, which is arranged to be placed over a channel bottom
- the channel bottom, which is arranged to be placed over a ground plate
- the ground plate. Preferably, said device is a cartridge.

In one aspect, each of the cover plate, the disposable cartridge, the frit the channel bottom and the ground plate comprises assembly holes for receiving screws for bonding the cover plate with the ground plate thereby compressing all the parts in between.

The present invention concerns also a method for assembling a disposable cartridge for Asymmetrical Flow Field-Flow Fractionation, the disposable cartridge comprising a top layer, a membrane and a spacer between the top layer and the membrane, the spacer comprising bonding holes, said method comprising:
- depositing a glue in the bonding holes so as to directly bonding the membrane to the top layer, thereby fixing the spacer in between.

The present invention concerns also a method for assembling a device for AF4 comprising the following steps:
- placing the disposable cartridge according to the invention under the cover plate and over the frit of the device,
- connecting, e.g. by screwing, the cover plate with the ground plate of the device.

In one embodiment, the method further comprises:
- removing the disposable cartridge from a sealed packaging before the placing step.

### Brief Description of the Drawings

The invention will be better understood with the aid of the description of an embodiment given by way of example and illustrated by the figures, in which:
Fig. 1 shows a section view of an AF4 cartridge.
Fig. 2 shows a perspective and exploded view of one embodiment of the disposable cartridge according to the invention.
Fig. 3 shows a top view of the spacer of one embodiment of the disposable cartridge according to the invention.
Fig. 4 shows a perspective view of one embodiment of the disposable cartridge according to the invention.
Fig. 5 shows a section view of one embodiment of the disposable cartridge according to the invention.

### Detailed Description of possible embodiments of the Invention

Fig. 2 shows a perspective and exploded view of one embodiment of the disposable cartridge 100 for AF4 according to the invention. It comprises:
- a top layer 1,
- a membrane 3,
- a spacer 2 between the top layer 1 and the membrane 3.

The top layer 1 serves as upper channel wall and gives to the disposable cartridge 100 the structural stability. It contains inlet and outlet for liquid flow, indicated with the reference numbers 15 respectively 13.

The spacer 2 defines the channel geometry 20. The membrane 3 is semi-permeable and serves as lower channel wall and as accumulation wall for particles.

The top layer 1, the membrane 2 and the spacer 3, which are the responsible for the formation of the separation channel, form therefore a single unit 100.

The use of the disposable cartridge 100 according to the invention has considerable advantages in terms of ease of use, avoiding cross-contamination and ensuring a consistent performance. The cartridge is not disassembled after its use for extracting the used membrane 3, but it is replaced by a new disposable cartridge 100, which comprises a new membrane 3.

In order to bond the top layer 1, the membrane 3 and the spacer 2 together, the spacer 2 according to the invention comprises bonding holes 24 arranged to receive some glue 8.

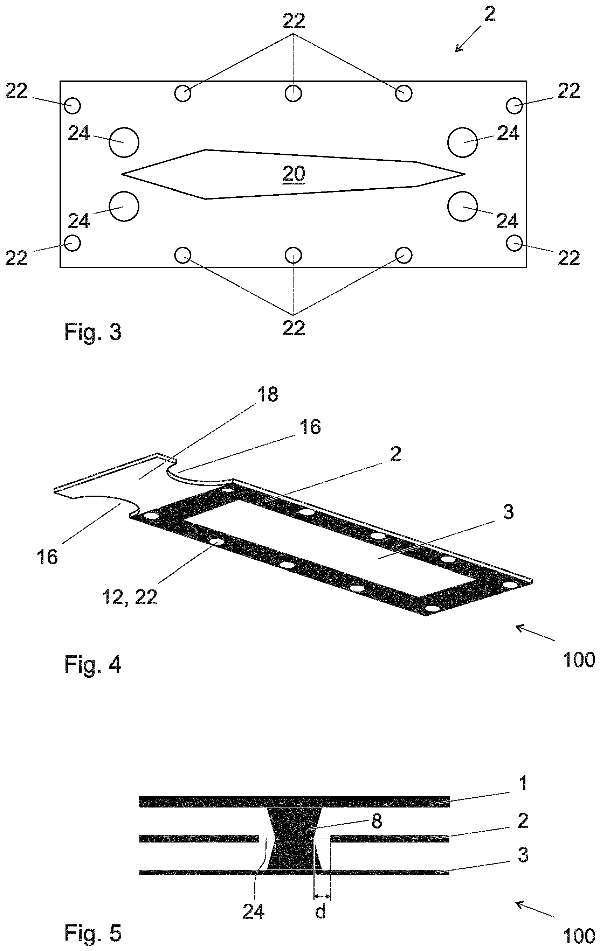

As illustrated in Fig. 5, which shows a section view of one embodiment of the disposable cartridge 100 according to the invention, some glue 8 is deposited in the bonding holes 24 so as to directly bonding the membrane 3 (placed under the spacer 2) with the top layer 1 (placed on the spacer 2), thereby fixing the spacer 2 in between. The bonding holes 24 are through holes, as clearly visible on Fig. 5.

The glue 8 is necessary to keep the top layer 1, the membrane 3 and the spacer 2 together but does not have any influence on the channel formation itself.

In fact, in one embodiment the bonding holes 24 are sufficiently large such that the glue 8 can expand into the bonding holes 24 while being compressed, without interfering with the spacer 2, i.e. without touching the spacer 2, as illustrated in Fig. 5, wherein it exists a distance d different from zero between the glue 8 and the spacer 2: in such a way, the glue 8 does not enter into contact with the spacer 2, thereby allowing an efficient formation of the channel. For example, the distance d is more than 1 mm, e.g. more than 1.5 mm.

In another embodiment, the glue 8 has a viscosity allowing the glue 8 to expand into the bonding holes 24 while being compressed, without touching the spacer 2. In one preferred embodiment, the disposable cartridge has a viscosity at room temperature belonging to the range 20 Pa·s to 80 Pa·s.

In one embodiment, the glue has a shear strength superior than 8 MPa, e.g. superior than 10 MPa.

The bonding holes 24 illustrated in the Figures have a circular shape. However, the invention is not limited to this embodiment and the bonding holes 24 can have any other shape, including but not limited to an oval, squared, rectangular, circular or polygonal shape.

In the illustrated embodiment, the spacer 2 has a rectangular shape and the bonding holes 24 are four and they are placed at or near the four corners of the spacer, as visible on Fig. 3.

The spacer 2 illustrated in Fig. 3 comprises also assembly holes 22 distinct from the bonding holes 24. The assembly holes 22 are in general circular and have a diameter of less than 4 mm, e.g. 2 mm. The bonding holes 24 in Fig. 3 are larger than the assembly holes 22 and have a diameter larger than 5 mm, e.g. larger than 8 mm, e.g. 10 mm.

As illustrated in Fig. 2, the layer 1 comprises assembly holes 12 as well. They pattern of the assembly holes 12 on the top layer 1 corresponds to the pattern of the assembly holes 22 on the spacer 2. The assembly holes 22 of the spacer 2 and the assembly holes 12 of the top layer 1 are aligned when the top layer 1 is superposed to the spacer 2 so as to receive screws for compressing the top layer 1, the membrane 3 and the spacer 2 together.

As visible in the embodiment of Fig. 4, the top layer 1 is longer than the spacer 2 so that, when the three parts are connected together, at least a part 18 of the top layer 1 does not enter into contact with the spacer 2 and the membrane 3. In such a way, a user can use this part 18 for handling the disposable cartridge 100. In the illustrated embodiment, the handling part 18 is at an end of the top layer 1 and comprises two semi-circular notches 16 for facilitating the handling of the disposable cartridge 100.

A sealed packaging, not visible in the Figures, can protect the disposable cartridge 100 before its use. Preferably, once the sealed packaging is removed, the disposable cartridge is placed into contact with the cover plate 0 and the frit 4, and the channel bottom 5 and the ground plate 6 are added according to the order illustrated in Fig. 1. All parts are then compressed together, e.g. by screwing the cover plate 0 and the ground plate 6 together.

Each of the cover plate 0, the frit 4, the channel bottom 5 and the ground plate 6 comprises assembly holes with the same pattern of the assembly holes 11, 12 of the disposable cartridge 100, for receiving screws for bonding the cover plate 0 with the ground plate 6 thereby compressing all the parts in between, thereby compressing the disposable cartridge 100 too. Preferably, once the sealed packaging removed, the disposable cartridge 100 is inserted in an AF4 instrument (not illustrated) in which the cover plate 0, the frit 4, the channel bottom 5 and the ground plate 6 are already integrated.

Once used, the disposable cartridge 100 is removed from the AF4 instrument and replaced by a new disposable cartridge 100.

### Reference numbers and signs used in the figures

- 0: Cover Plate
- 1: Top Layer
- 2: Spacer
- 3: Membrane
- 4: Frit
- 5: Channel Bottom
- 6: Ground Plate
- 8: Glue
- 12: Assembly holes of the top layer
- 13: Liquid flow Outlet
- 15: Liquid flow Inlet
- 16: Notch
- 18: Part of the Top Layer
- 20: Channel geometry
- 22: Assembly hole of the spacer
- 24: Bonding hole of the spacer
- 100: Disposable Cartridge
- 200: AF4 Cartridge
- d: Distance

## Claims

1. A disposable cartridge (100) for Asymmetrical Flow Field-Flow Fractionation comprising:
- a top layer (1)
- a membrane (3)
- a spacer (2) between the top layer (1) and the membrane (3), the spacer (2) comprising bonding holes (24), **characterized in that** the disposable cartridge (100) comprises a glue (8) in said bonding holes (24), so as to directly bond said membrane (3) with said top layer (1), thereby fixing the spacer (2) in between.

2. The disposable cartridge (100) of claim 1, wherein the glue (8) has a viscosity allowing the glue (8) to expand into the bonding holes (24) while being compressed, without touching the spacer (2).

3. The disposable cartridge (100) of claim 2, wherein the viscosity of the glue (8) belongs to the range from 5 Pa·s to 150 Pa·s, in particular from 20 Pa·s to 80 Pa·s.

4. The disposable cartridge (100) of one of claims 1 to 3, wherein the glue (8) has a shear strength more than 10 MPa, so as to prevent the detaching of the membrane (3) from the top layer (1).

5. The disposable cartridge (100) of one of the previous claims,
wherein the spacer (2) comprises a channel geometry (20), wherein the distance between each bonding hole (24) and said channel geometry (20) is more than 3.5 mm.

6. The disposable cartridge (100) of one of the previous claims,
wherein the spacer (2) comprises four corners and four bonding hole (24), each bonding hole (24) being placed near or at each corner.

7. The disposable cartridge (100) of one of the previous claims,
wherein the top layer (1) comprises a handling part (18) which is not connected to the spacer (2) for facilitating the handling of the disposable cartridge (100).

8. The disposable cartridge (100) of the previous claim, wherein the handling part (18) comprises at least a notch (16).

9. The disposable cartridge (100) of one of the previous claims,
wherein the top layer (1) comprises first assembly holes (12), the spacer (2) comprises second assembly holes (22) distinct from the bonding holes (24), the first assembly holes (12) and second assembly holes (22) being arranged to be aligned when the top layer (1) is superposed to the spacer (2) so as to receive screws for compressing the top layer (1), the membrane (3) and the spacer (2) together.

10. The disposable cartridge (100) of the previous claim, wherein said bonding holes (24) are larger than said second assembly holes (22).

11. The disposable cartridge (100) of the previous claim, wherein said bonding holes (24) have a circular shape, and a diameter larger than 5 mm, e.g. larger than 8 mm, e.g. 10 mm.

12. The disposable cartridge (100) of one of the previous claims, comprising a sealed packaging.

13. A device for Asymmetrical Flow Field-Flow Fractionation, comprising:
- a cover plate (0),
- the disposable cartridge (100) according to one of the previous claims, the disposable cartridge (100) being arranged to be placed under the cover plate (0) and over a frit (4),
- the frit (4) being arranged to be placed over a channel bottom (5)
- the channel bottom (5) being arranged to be placed over a ground plate (6),
- the ground plate (6).

14. A method for assembling a disposable cartridge (100) for Asymmetrical Flow Field-Flow Fractionation, said disposable cartridge comprising a top layer (1), a membrane (3) and a spacer (2) between the top layer (1) and the membrane (3), said spacer comprising bonding holes (24),
said method **characterized in that** it comprises:
- depositing a glue (8) in said bonding holes (24) so as to directly bond said membrane (3) with said top layer (1), thereby fixing the spacer (2) in between.

15. A method for assembling a device of claim 13, comprising:
- placing the disposable cartridge (100) of one of claims 1 to 12 under the cover plate (0) and over the frit (4),
- compressing, e.g. by screwing, the cover plate (0) and the ground plate (6) together.

16. The method of the previous claim, further comprising
- removing the disposable cartridge (100) from a sealed packaging before the placing step.

## Patentansprüche

1. Ein Einwegeinsatz (100) für asymmetrische-Fluss-Feldflussfraktionierung aufweisend:
- eine obere Schicht (1)
- eine Membran (3)
- ein Abstandselement (2) zwischen der oberen Schicht (1) und der Membran (3), wobei das Abstandselement (2) Bindungslöcher (24) aufweist, **dadurch gekennzeichnet, dass** der Einwegeinsatz (100) einen Klebstoff (8) in den Bindungslöchern (24) aufweist, um so die Membran (3) direkt mit der oberen Schicht (1) zu verbinden, und so das Abstandselement (2) dazwischen zu befestigen.

2. Einwegeinsatz (100) nach Anspruch 1, wobei der Klebstoff (8) eine Viskosität hat, die dem Klebstoff (8) erlaubt, sich in die Bindungslöcher (24) auszudehnen, während er komprimiert wird, ohne das Abstandselement (2) zu berühren.

3. Einwegeinsatz (100) nach Anspruch 2, wobei die Viskosität des Klebstoffs (8) in dem Bereich von 5 Pa s bis 150 Pa s, insbesondere von 20 Pa s bis 80 Pa s, liegt.

4. Einwegeinsatz (100) nach einem der Ansprüche 1 bis 3, wobei der Klebstoff (8) Scherfestigkeit von mehr als 10 MPa aufweist, um so das Ablösen der Membran (3) von der oberen Schicht (1) zu vermeiden.

5. Einwegeinsatz (100) nach einem der vorigen Ansprüche, wobei das Abstandselement (2) einen Kanalgeometrie (20) aufweist, wobei die Entfernung zwischen jedem Bindungsloch (24) und der Kanalgeometrie (20) mehr als 3,5 mm ist.

6. Einwegeinsatz (100) nach einem der vorigen Ansprüche, wobei das Abstandselement (2) vier Ecken und vier Bindungslöcher (24) aufweist, wobei jedes Bindungsloch (24) nahe oder an jeder Ecke angeordnet ist.

7. Einwegeinsatz (100) nach einem der vorigen Ansprüche, wobei die obere Schicht (1) einen Handhabungsteil (18) aufweist, der nicht mit dem Abstandselement (2) verbunden ist, um die Handhabung des Einwegeinsatzes (100) zu erleichtern.

8. Einwegeinsatz (100) nach dem vorigen Anspruch, wobei das Handhabungsteil (18) mindestens eine Kerbe (16) aufweist.

9. Einwegeinsatz (100) nach einem der vorigen Ansprüche, wobei die obere Schicht (1) erste Montagelöcher (12) aufweist, wobei das Abstandselement (2) zweite Montagelöcher (22), die sich von den Bindungslöchern (24) unterscheiden, aufweist, wobei die ersten Montagelöcher (12) und die zweiten Montagelöcher (22) so angeordnet sind, um aufeinander ausgerichtet zu sein, wenn die obere Schicht (1) auf dem Abstandselement (2) liegt, um Schrauben zur Komprimierung der oberen Schicht (1), der Membran (3) und des Abstandselements (2) zu empfangen.

10. Einwegeinsatz (100) nach dem vorigen Anspruch, wobei die Bindungslöcher (24) größer als die zweiten Montagelöcher sind.

11. Einwegeinsatz (100) nach dem vorigen Anspruch, wobei die Bindungslöcher (24) eine kreisförmige Form und einen Durchmesser größer als 5mm, z.B. größer als 8mm, z.B. größer als 10 mm, haben.

12. Einwegeinsatz (100) nach einem der vorigen Ansprüche, aufweisend eine dichtschließende Verpackung.

13. Ein Gerät für asymmetrische-Fluss-Feldflussfraktionierung, aufweisend:
- eine Abdeckplatte (0),
- den Einwegeinsatz (100) nach einem der vorigen Ansprüche, wobei der Einwegeinsatz (100) ausgebildet ist, unter die Abdeckplatte (0) und über eine Fritte (4) angeordnet zu werden,
- die Fritte (4) ausgebildet über einem Kanalboden (5) angeordnet zu werden,
- der Kanalboden (5) ausgebildet über eine Grundplatte (6) angeordnet zu werden,
- die Grundplatte (6).

14. Ein Verfahren zum Zusammenbau eines Einwegeinsatz (100) für asymmetrische-Fluss-Feldflussfraktionierung, wobei der Einwegeinsatz (100) eine obere Schicht (1), eine Membran (3) und ein Abstandselement (2) zwischen der oberen Schicht (1) und der Membran (3) aufweist, wobei das Abstandselement (2) Bindungslöcher (24) aufweist,
wobei das Verfahren **dadurch gekennzeichnet ist, dass** es aufweist:
- Auftragen eines Klebstoffs (8) in die Bindungslöchern (24), um so die Membran (3) direkt mit der oberen Schicht (1) zu verbinden, und so das Abstandselement (2) dazwischen zu befestigen.

15. Ein Verfahren zum Zusammenbau eines Geräts nach Anspruch 13 aufweisend:
- Anordnen des Einwegeinsatzes (100) nach einem der Ansprüche 1 bis 12 unter der Abdeckplatte (0) und über der Fritte (4),
- Zusammendrücken, z.B. durch Schrauben, der Abdeckplatte (0) und der Grundplatte (6).

16. Verfahren nach dem vorigen Anspruch, weiter aufweisend:
- Entfernen des Einwegeinsatzes (100) von einer dichtschließenden Verpackung vor dem Anordnungsschritt.

## Revendications

1. Cartouche jetable (100) pour fractionnement en continu de flux asymétrique, comprenant :
- une couche supérieure (1)
- une membrane (3)
- un espaceur (2) entre la couche supérieure (1) et la membrane (3), l'espaceur (2) comprenant des trous de liaison (24),
**caractérisée en ce que** la cartouche jetable (100) comprend une colle (8) dans lesdits trous de liaison (24), en sorte à directement lier ladite membrane (3) avec ladite couche supérieure (1), fixant ainsi l'espaceur (2) entre les deux.

2. Cartouche jetable (100) selon la revendication 1, dans laquelle la colle (8) a une viscosité permettant à la colle (8) de s'étaler dans les trous de liaison (24) sous compression, sans toucher l'espaceur (2).

3. Cartouche jetable (100) selon la revendication 2, dans laquelle la viscosité de la colle (8) se situe dans la plage de 5 Pa·s à 150 Pa·s, en particulier de 20 Pa·s à 80 Pa·s.

4. Cartouche jetable (100) selon l'une des revendications 1 à 3, dans laquelle la colle (8) a une résistance au cisaillement de plus de 10 MPa, en sorte d'empêcher que la membrane (3) se détache de la couche supérieure (1).

5. Cartouche jetable (100) selon l'une des revendications précédentes, dans laquelle l'espaceur (2) comprend une géométrie de canal (20), la distance entre chacun des trous de liaison (24) et ladite géométrie de canal (20) étant supérieure à 3.5 mm.

6. Cartouche jetable (100) selon l'une des revendications précédentes, dans laquelle l'espaceur (2) comprend quatre coins et quatre trous de liaison (24), chaque trou de liaison (24) étant placé près de ou à chaque coin.

7. Cartouche jetable (100) selon l'une des revendications précédentes, dans laquelle la couche supérieure (1) comprend un élément de maniement (18) qui n'est pas connecté à l'espaceur (2) pour faciliter la manipulation de la cartouche jetable (100).

8. Cartouche jetable (100) selon la revendication précédente, dans laquelle l'élément de maniement (18) comprend au moins une encoche (16).

9. Cartouche jetable (100) selon l'une des revendications précédentes, dans laquelle la couche supérieure (1) comprend des premiers trous d'assemblage (12), l'espaceur (2) comprend des deuxièmes trous d'assemblage (22) distincts des trous de liaison (24), les premiers trous d'assemblage (12) et les deuxièmes trous d'assemblage (22) étant agencés pour être alignés lorsque la couche supérieure (1) est superposée à l'espaceur (2) en sorte à recevoir des vis pour comprimer ensemble la couche supérieure (1), la membrane (3) et l'espaceur (2).

10. Cartouche jetable (100) selon la revendication précédente, dans laquelle lesdits trous de liaison (24) sont plus larges que lesdits deuxièmes trous d'assemblage (22).

11. Cartouche jetable (100) selon la revendication précédente, dans laquelle lesdits trous de liaison (24) ont une forme circulaire et un diamètre supérieur à 5 mm, par exemple supérieur à 8 mm, par exemple 10 mm.

12. Cartouche jetable (100) selon l'une des revendications précédentes, comprenant un emballage scellé.

13. Dispositif pour fractionnement en continu de flux asymétrique, comprenant :
- une plaque de couverture (0),
- une cartouche jetable (100) selon l'une des revendications précédentes, la cartouche jetable (100) étant agencée pour être placée sous la plaque de couverture (0) et au-dessus d'une pièce frittée (4),
- la pièce frittée (4) étant agencée pour être placée au-dessus d'un fond de canal (5),
- le fond de canal (5) étant agencé pour être placé au-dessus d'une plaque de base (6),
- la plaque de base (6).

14. Procédé d'assemblage d'une cartouche jetable (100) pour fractionnement en continu de flux asymétrique, ladite cartouche jetable comprenant une couche supérieure (1), une membrane (3) et un espaceur (2) entre la couche supérieure (1) et la membrane (3), ledit espaceur (2) comprenant des trous de liaison (24),
ledit procédé étant **caractérisé en ce qu'**il comprend :
- de déposer une colle (4) dans lesdits trous de liaison (24) en sorte à directement lier ladite membrane (3) avec ladite couche supérieure (1), fixant ainsi l'espaceur (2) entre les deux.

15. Procédé d'assemblage d'un dispositif selon la revendication 13, comprenant :
- de placer la cartouche jetable (100) de l'une des revendications 1 à 12 sous la plaque de couverture (0) et au-dessus de la pièce frittée (4),
- de comprimer ensemble, par exemple par vissage, la plaque de couverture (0) et la plaque de base (6).

16. Procédé selon la revendication précédente, comprenant en outre :
- de retirer la cartouche jetable (100) d'un emballage scellé avant l'étape de placement.
